# EUROPÄISCHE PATENTANMELDUNG

(11) **EP 2 461 477 A2**
(43) Veröffentlichungstag der Anmeldung: **06.06.2012**
(21) Anmeldenummer: 11008394.6
(22) Anmeldetag: 19.10.2011
(51) Int. Cl.: H02P 6/14, H02P 6/16

(54) **Kommutierungsverfahren für einen bürstenlosen Gleichstrommotor**

(30) Priorität: 03.12.2010 DE 102010053383
(71) Anmelder: Conti Temic Microelectronic GmbH, 90411 Nürnberg (DE)
(72) Erfinder: Mahzari, Mahdi, 90562 Heroldsberg (DE)

(57) **Zusammenfassung**

Ein Kommutierungsverfahren für einen bürstenlosen Gleichstrommotor umfasst die Verfahrensschritte Bereitstellen eines bürstenlosen Gleichstrommotors (4) mit einem um eine Rotationsachse (8) drehbaren Rotor (7) und mehreren mittels einer Schaltung (3) ansteuerbaren Statorspulen (6A, 6B, 6C), Bestimmen der Rotationsposition des Rotors (7) bezüglich der Rotationsachse (8), Auswählen einer anzusteuernden Statorspule (6A; 6B; 6C) in Abhängigkeit der bestimmten Rotationsposition des Rotors. (7) mit einer Steuerungseinheit (11), Erzeugen eines Ansteuersignals für einen Schaltvorgang mittels der Schaltung (3), Ansteuern der ausgewählten Statorspule (6A; 6B; 6C) mittels der Steuerungseinheit (11) durch Übertragen des von der Schaltung (3) erzeugten Ansteuersignals, wobei genau ein Schaltvorgang innerhalb einer für die ausgewählte Statorspule (6A; 6B; 6C) relevanten Schaltperiode erfolgt.

## Beschreibung

Die Erfindung betrifft ein Kommutierungsverfahren für einen bürstenlosen Gleichstrommotor.

Bürstenlose Gleichstrommotoren werden in der Praxis für eine Vielzahl von Antriebsaufgaben eingesetzt. Zur Erzeugung eines Antriebsmoments müssen die Motorphasen des Gleichstrommotors derart mit Strom beaufschlagt werden, dass sich die Permanentmagnete des Rotors mit dem sich im Stator ausbildenden und wandernden magnetischen Feld ausrichten. Der Strom muss somit zwischen den Motorphasen in Abhängigkeit der Stellung des Rotors kommutieren. Üblicherweise erfolgt die Kommutierung mittels einer elektrischen Halbleiterschaltung, die insbesondere Metall-Oxid-Halbleiter-Feldeffekttransistoren (MOSFET) aufweist. Während der Kommutierung des Gleichstrommotors wird eine elektromagnetische Abstrahlung verursacht. Die elektromagnetische Strahlung kann zu Störfeldern führen, die den Betrieb von elektronischen Komponenten nachteilig beeinflussen können. Darüber hinaus führt die elektromagnetische Abstrahlung zu einem Energieverlust und ist daher unwirtschaftlich.

Der Erfindung liegt die Aufgabe zugrunde, ein Kommutierungsverfahren für einen bürstenlosen Gleichstrommotor dahingehend zu verbessern, dass die elektromagnetische Abstrahlung reduziert ist.

Diese Aufgabe ist durch ein Kommutierungsverfahren mit den Merkmalen des Anspruchs 1 gelöst. Innerhalb einer relevanten Schaltperiode erfolgt für eine ausgewählte Statorspule genau ein Schaltvorgang. Dazu wird die anzusteuernde Statorspule in Abhängigkeit einer Rotationsposition eines Rotors des bürstenlosen Gleichstrommotors mit einer Steuerungseinheit ausgewählt, wobei zunächst die Rotationsposition des Rotors bezüglich einer Rotationsachse bestimmt wird. Das Ansteuersignal für den Schaltvorgang wird mittels der Schaltung erzeugt. Mittels des erfindungsgemäßen Kommutierungsverfahrens wird die Anzahl der für die Kommutierung notwendigen Schaltvorgänge auf ein Minimum, d. h. auf genau einen Schaltvorgang, reduziert. Durch einen Schaltvorgang, d. h. an einer Schaltflanke zwischen zwei Schaltzuständen, wird elektromagnetische Abstrahlung verursacht. Durch die Reduzierung der Schaltvorgänge wird entsprechend die elektromagnetische Abstrahlung, insbesondere in einem UKW-Bereich von etwa 80 bis 120 MHz, reduziert. Da jeder Schaltvorgang zudem Schaltverluste beispielsweise in einem Umrichter verursachen kann, sind durch das erfindungsgemäße Kommutierungsverfahren Schaltverluste reduziert, so dass ein Gleichstrommotor, der mit dem genannten Kommutierungsverfahren betrieben wird, einen erhöhten Gesamtwirkungsgrad aufweist.

Bei einem Verfahren nach Anspruch 2 sind Ansteuersignale auf eine Schalt-Charakteristik des Gleichstrommotors angepasst. Es wird insbesondere ausgenutzt, dass die Kommutierung des Gleichstrommotors während zwei aufeinanderfolgender Schaltperioden, die auch als Motorphasen bezeichnet werden, erfolgt. Insbesondere erfolgen die beiden Motorphasen direkt aufeinander. Dadurch wird vermieden, dass ein üblicherweise zusätzlicher Schaltvorgang am Übergang der ersten Schaltperiode auf die zweite Schaltperiode erforderlich ist.

Bei einem Verfahren nach Anspruch 3 ermöglicht ein einziger Ansteuerpuls die Kommutierung des Gleichstrommotors an einem Schalter der Schaltung. Ein derartiges Verfahren ist unaufwändig und effektiv.

Ein Verfahren nach Anspruch 4 ermöglicht einen bezogen auf die relevanten Schaltperioden symmetrischen Ansteuerpuls. Entsprechend ist ein Zeitintervall der Bestromung der ausgewählten Statorspule zentriert an einer Grenze zwischen den beiden Schaltperioden angeordnet. Das bedeutet, dass eine Rotations-Antriebskraft auf den Rotor infolge der Bestromung der Statorspulen bezogen auf die beiden Schaltperioden gleichmäßig verteilt ist.

Bei einem Verfahren nach Anspruch 5 sind die beiden den Ansteuerpuls definierenden Ansteuersignale symmetrisch bezüglich der Grenze zwischen den beiden Schaltperioden angeordnet, so dass ein Betrag einer mit dem Ansteuerpuls übertragenen Ladung veränderlich einstellbar ist. Mit der Breite des Ansteuerpulses wächst die Menge der übertragenen Ladung proportional. Die die Statorspule durchfließende Ladungsmenge bewirkt ein Magnetfeld, das das Drehmoment auf den Rotor verursacht. Entsprechend ist auch das Drehmoment durch eine Veränderung der Breite des Ansteuerpulses einstellbar.

Bei einem Verfahren nach Anspruch 6 ist die Erzeugung des Ansteuersignals besonders effektiv. Insbesondere ist es möglich, einzelne Ansteuersignale bzw. einzelne Ansteuerpulse exakt und unkompliziert zu erzeugen.

Ein Verfahren nach Anspruch 7 bietet eine vereinfachte Phasenmodulation, indem zwischen zwei bekannten Phasenlagen, insbesondere einer 0°-Phasenlage und einer 180°-Phasenlage umgeschaltet wird.

Ein Verfahren nach Anspruch 8 ermöglicht eine besonders effektive Nutzung der Phasenmodulation für die Kommutierung des Gleichstrommotors. Insbesondere ist es möglich, erhöhte Drehmomentrippel, die beispielsweise bei geringen Motordrehzahlen infolge der Phasenmodulation auftreten können, zu vermeiden. Alternativ ist es auch möglich, die Phasenmodulation ab einem unteren Schwellwert eines Motordrehmoments zu aktivieren. In einem Bereich unterhalb der Schwellwerte für Motordrehzahl bzw. Motordrehmoment kann die Kommutierung beispielsweise mittels Pulsweitenmodulation erfolgen.

Ein Verfahren nach Anspruch 9 ermöglicht eine robuste und zuverlässige Bestimmung der Rotationsposition des Rotors. Dadurch ist eine effektive und fehlerreduzierte Ansteuerung der entsprechenden Statorspule möglich.

Die Bestimmung der Rotationsposition bei einem Verfahren nach Anspruch 10 ist effektiv und ermöglicht eine schnelle Auswertung.

Bei einem Verfahren nach Anspruch 11 kann auf Lagesensoren zur Bestimmung der Rotationsposition des Rotors verzichtet werden. Der systemtechnische Aufwand ist reduziert.

Bei einem Verfahren nach Anspruch 12 kann ein Schaltpunkt unkompliziert und genau ermittelt werden.

Weitere Merkmale, Vorteile und Einzelheiten der Erfindung ergeben sich aus der nachfolgenden Beschreibung mehrerer Ausführungsbeispiele anhand der Zeichnung. Es zeigen:
- Fig. 1: einen Gleichstrommotor mit einer elektrischen Halbleiterschaltung,
- Fig. 2: eine Darstellung der Schaltzustände der Halbleiterschaltung gemäß Fig. 1 in Abhängigkeit der Schaltperioden,
- Fig. 3a, 3b: Darstellungen der elektromagnetischen Verträglichkeiten des Gleichstrommotors kommutiert nach dem erfindungsgemäßen Verfahren und in herkömmlicher Weise und
- Fig. 4a, 4b: schematische Darstellungen eines Schaltvorgangs für einen sensorlosen Gleichstrommotor kommutiert mit dem erfindungsgemäßen Verfahren und mit einem herkömmlichen Verfahren.

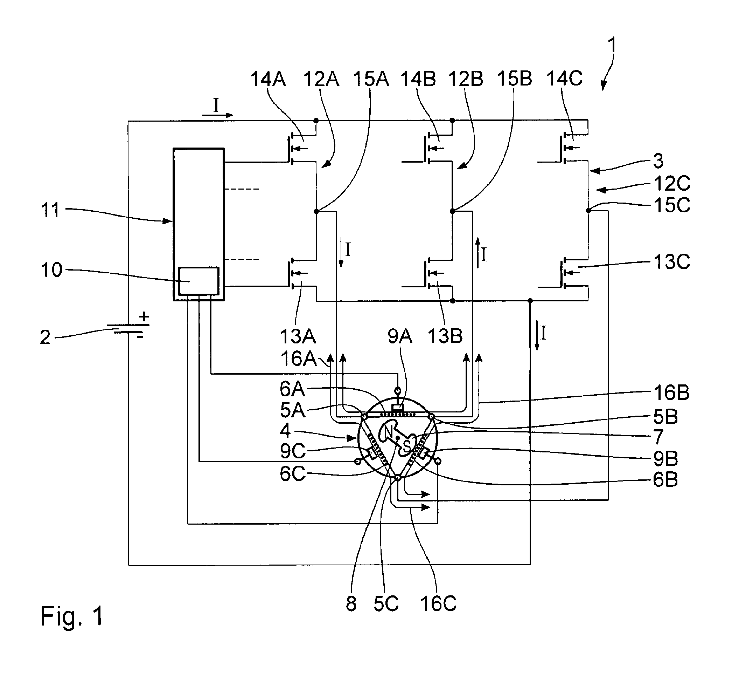

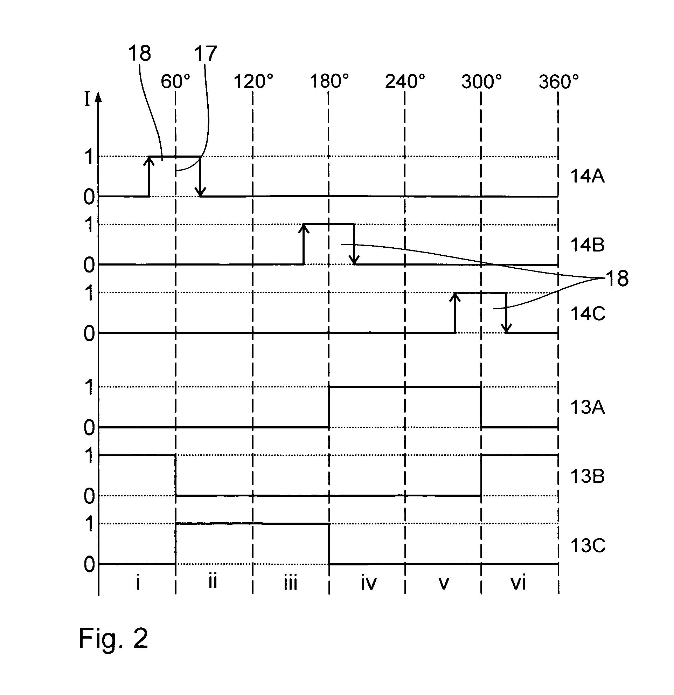

Nachfolgend wird unter Bezugnahme auf die Figuren 1 und 2 ein erstes Ausführungsbeispiel der Erfindung beschrieben. Eine elektrische Halbleiterschaltung 1 weist eine als Gleichspannungsquelle ausgebildete elektrische Quelle 2 auf, die über eine Brückenschaltung 3 mit einem bürstenlosen Gleichstrommotor 4 verbunden ist.

Der Gleichstrommotor 4 ist dreiphasig ausgebildet und weist für jede Phase A, B, C einen Motoranschluss 5 auf. Die Motoranschlüsse werden entsprechend den Phasen mit 5A, 5B und 5C bezeichnet. Entsprechend weist der Gleichstrommotor drei Statorspulen 6A, 6B und 6C auf, wobei die Spule 6A zwischen den Motoranschlüssen 5A, 5B, die Spule 6B zwischen den Motoranschlüssen 5B, 5C und die Spule 6C zwischen den Motoranschlüssen 5C, 5A angeordnet sind. Die Statorspulen 6A, 6B und 6C sind in einer Dreieckschaltung angeordnet. Eine Dreieckschaltung ermöglicht gegenüber einer Sternschaltung, bei der die drei Spulen an einem gemeinsamen, mittigen Knoten miteinander verbunden sind, höhere Motorströme, realisiert kleinere Spannungen und ist insbesondere bei Anwendungen mit hohen Motordrehzahlen n gut geeignet.

Im Zentrum der Dreieckschaltung ist ein Rotor 7 vorgesehen, der um eine Rotationsachse 8 drehbar gelagert ist. Der Rotor 7 ist als Permanentmagnet ausgebildet mit einem Nordpol N und einem Südpol S, die bezüglich der Rotationsachse 8 an dem Rotor 7 diametral gegenüberliegend angeordnet sind.

Jeder Statorspule 6A, 6B, 6C ist ein Lagesensor in Form eines Hallsensors 9A, 9B, 9C zugeordnet. Die Hallsensoren 9A, 9B, 9C stehen in Signalverbindung mit einer Berechnungseinheit 10, die in eine Steuerungseinheit 11 integriert ist. Es ist auch möglich, die Berechnungseinheit 10 unabhängig, d. h. separat, von der Steuerungseinheit 11 auszuführen.

Die Brückenschaltung 3 ist entsprechend dem Gleichstrommotor 4 dreiphasig ausgebildet und weist drei Längszweige 12A, 12B und 12C auf. Jeder der Längszweige 12A, 12B, 12C weist einen ersten Halbleiterschalter 13A, 13B, 13C und einen in Reihe dazu geschalteten zweiten Halbleiterschalter 14A, 14B, 14C auf. Die Halbleiterschalter 13, 14 sind gemäß dem gezeigten Ausführungsbeispiel als MOSFET ausgebildet. Es ist alternativ denkbar, die Halbleiterschalter 13, 14 als IGBT auszubilden.

Zwischen den Halbleiterschaltern 13, 14 ist jeweils ein Knoten 15A, 15B, 15C angeordnet. Die Knoten 15A, 15B, 15C sind mit den entsprechenden Motoranschlüssen 5A, 5B, 5C verbunden, so dass zwischen den Knoten 15A, 15B, 15C Querzweige 16A, 16B, 16C ausgebildet sind, in denen jeweils der Gleichstrommotor 4 angeordnet ist. Die Querzweige 16A, 16B, 16C sind in Fig. 1 durch entsprechende Pfeile angedeutet.

Zur Ansteuerung der Halbleiterschalter 13, 14 zum Erzeugen eines Ansteuersignals für einen Schaltvorgang ist die Steuerungseinheit 11 vorgesehen, die mit den Steueranschlüssen der Halbleiterschalter 13, 14 verbunden ist.

In der in Fig. 1 gezeigten Stellung des Rotors 7 ist dessen Nordpol N dem Motoranschluss 5A und dessen Südpol S der Statorspule 6B zugewandt.

Fig. 1 zeigt einen ersten Schaltzustand der Halbleiterschaltung 1, bei dem die Halbleiterschalter 14A und 13B geschlossen sind, so dass der Strom I durch den Gleichstrommotor 4 über die Motoranschlüsse 5A und 5B entlang der Querzweige 16A und 16B fließt. Das heißt, die Statorspule 6A wird bestromt. Der Stromfluss ist in Fig. 1 anhand der mit I gekennzeichneten Pfeile angedeutet. Die stromdurchflossene Spule 6A bildet ein Magnetfeld aus, das derart gerichtet ist, dass der Nordpol N des Rotors 7 von der Spule 6A angezogen wird. Das bedeutet, dass sich der Rotor 7 wegen des Magnetfeldes der bestromten Spule 6A um die Rotationsachse 8 im Uhrzeigersinn zu der Spule 6A hin dreht.

Mit dem Rotor 7 dreht sich auch das Magnetfeld des als Permanentmagnet ausgeführten Rotors 7 um die Rotationsachse 8, so dass der Hallsensor 9A eine Ausgangsspannung liefert, die an die Berechnungseinheit 10 übermittelt wird. Somit ist es möglich, durch ständige Überwachung der von den Hallsensoren 9A, 9B, 9C gelieferten Ausgangsspannungen die Rotationsposition des Rotors 7 bezüglich der Rotationsachse 8 zu bestimmen. Dieses Ergebnis, d. h. die bestimmte Rotationsposition wird von der Berechnungseinheit 10 an die Steuerungseinheit 11 als Eingangsdaten übermittelt. In Abhängigkeit der bestimmten Rotationsposition des Rotors 7 erfolgt mittels der Steuerungseinheit 11 ein Auswählen der anzusteuernden Statorspule 6A, 6B, 6C. Dazu legt die Steuerungseinheit 11 fest, welche Halbleiterschalter 13, 14 geschaltet werden, um einen entsprechenden Stromfluss zum Bestromen der ausgewählten Statorspule 6 zu ermöglichen. Die Bestromung der ausgewählten Statorspule 6 erfolgt durch Übertragen des von der Halbleiterschaltung 1 erzeugten Ansteuersignals.

Nachdem sich der Rotor 7 von der in Fig. 1 gezeigten Stellung um 60° im Uhrzeigersinn weiter gedreht hat, ist der Nordpol N der Statorspule 6A und der Südpol S dem Motoranschluss 5C zugewandt. Um eine weitere Drehbewegung des Rotors 7 im Uhrzeigersinn um die Rotationsachse 8 zu bewirken, wird nun die Statorspule 6C bestromt, indem die Halbleiterschalter 13C und 14A von der Steuerungseinheit 11 geschaltet werden. Entsprechend sind die Querzweige 16A und 16C aktiviert. Der Südpol S des Rotors 7 wird von einem von der Statorspule 6C verursachten Magnetfeld angezogen und dreht sich um 60° im Uhrzeigersinn, bis der Südpol S der Statorspule 6C und der Nordpol N dem Motoranschluss 5B zugewandt sind.

Daraus ergibt sich, dass ein Ansteuern der Statorspulen 6 bezogen auf eine 360°-Umdrehung des Rotors 7 um die Rotationsachse 8 in sechs jeweils gleich große, d. h. jeweils 60°-Winkelumdrehung umfassende, Schaltperioden aufgeteilt werden kann. In Fig. 2 sind die Schaltperioden mit i, ii, iii, iv, v und vi gekennzeichnet.

Im Folgenden wird anhand von Fig. 2 das Ansteuern der auszuwählenden Statorspulen 6 näher beschrieben. In Abhängigkeit einer Rotationsposition des Rotors 7 bezüglich der Rotationsachse 8 sind die Schaltzustände für die Halbleiterschalter 13, 14 dargestellt. Dabei bedeutet "0", dass der jeweilige Schalter 13, 14 geöffnet ist; entsprechend repräsentiert "1" eine geschlossene Stellung des jeweiligen Schalters 13, 14. Eine vollständige, d. h. 360°-Umdrehung des Rotors 7 ist in sechs identische Schaltperioden i bis vi unterteilt.

Während der ersten Schaltperiode i sind die Schalter 13B und 14A geschlossen, so dass der Strom I den Querzweigen 16A, 16B folgt und damit die Statorspule 6A bestromt wird. Dieser Schaltzustand wurde bereits anhand der Fig. 1 beschrieben. In der zweiten Schaltperiode ii ist immer noch der Halbleiterschalter 14A geschlossen; dafür ist nun der erste Halbleiterschalter 13C und nicht mehr der Halbleiterschalter 13B geschlossen, so dass während der zweiten Schaltperiode ii die Statorspule 6C bestromt ist.

Aus Fig. 2 geht weiterhin hervor, dass sich die Schaltvorgänge für die ersten Halbleiterschalter 13 und die zweiten Halbleiterschalter 14 unterscheiden. Die ersten Halbleiterschalter 13 sind während der relevanten Schaltperioden kontinuierlich, d. h. während der gesamten Dauer der genannten Schaltperioden geschlossen.

Dagegen erfolgt das Schließen des Halbleiterschalters 14A dadurch, dass ein einziger Schaltvorgang innerhalb der ersten Schaltperiode i erfolgt. Dieser Schaltvorgang ist durch einen Pfeil in Fig. 2 gekennzeichnet. Der Schaltvorgang zum Schließen des Schalters 14A erfolgt gemäß dem schematischen Schaltplan in Fig. 2 etwa nach zwei Drittel der ersten Schaltperiode i. Der Zeitpunkt des Ansteuersignals, d. h. der Zeitpunkt des Ansteuerns der ausgewählten Statorspule 6A, kann innerhalb der Schaltperiode i veränderlich gestaltet sein, so dass das Ansteuern zu einem früheren oder zu einem späteren Zeitpunkt innerhalb der ersten Schaltperiode i erfolgen kann.

Während der zweiten Schaltperiode ii wird der Schalter 14A etwa nach einem Drittel der Schaltperiode ii wieder geöffnet. Das Öffnen des Schalters 14A ist durch einen nach unten gerichteten Pfeil angedeutet. Entsprechend ist die Auswahl des Zeitpunkts zum Schließen des Schalters 14A innerhalb der zweiten Schaltperiode ii veränderlich. Gemäß dem gezeigten Ausführungsbeispiel in Fig. 2 sind die Ansteuersignale zum Schließen und zum Öffnen des Schalters 14A bezüglich einer Grenze 17 zwischen den beiden Schaltperioden i, ii zentriert, d. h. symmetrisch angeordnet. Das erste Ansteuersignal zum Schließen des Halbleiterschalters 14A repräsentiert einen Beginn eines Ansteuerpulses 18 und das zweite Ansteuersignal zum Öffnen des Halbleiterschalters 14A bildet ein Ende des Ansteuerpulses 18.

Das Erzeugen der Ansteuersignale erfolgt gemäß dem gezeigten Ausführungsbeispiel durch Phasenmodulation. Insbesondere handelt es sich dabei um eine zentrische Phasenmodulation. Die Phasenmodulation ermöglicht eine Reduzierung der Anzahl der Schaltvorgänge auf ein Minimum. Dadurch ist es möglich, einen Betrag einer elektromagnetischen Abstrahlung zu reduzieren und somit eine elektromagnetische Verträglichkeit zu erhöhen und gleichzeitig Schaltverluste, die beispielsweise in Umrichtern auftreten können, zu reduzieren. Insbesondere kann das Ansteuersignal durch binäre Phasenmodulation erzeugt werden, indem beispielsweise ein Umschalten zwischen zwei Phasenlagen, insbesondere durch ein Umschalten zwischen einer 0°-Phasenlage und einer 180°-Phasenlage erfolgt.

Dadurch, dass die Ansteuersignale zum Beginn und Ende des Ansteuerpulses 18 während einer Schaltperiode erzeugt werden, erfolgt das Bestromen der relevanten Statorspule 6 mit einer hohen Stromdichte. Ein daraus resultierender Drehmomentimpuls auf den Rotor 7 bewirkt insbesondere bei einer geringen Motordrehzahl n oder einem geringen Motordrehmoment M eine stoßhafte Übertragung einer Antriebskraft auf den Rotor 7. Entsprechend können bei geringer Motordrehzahl n und geringem Motordrehmoment M Drehmomentrippel auftreten, die im Vergleich zu einer gewöhnlichen Kommutierung eines bürstenlosen Gleichstrommotors mittels Pulsweitenmodulation erhöht sind. Es ist möglich, die Phasenmodulation als Modulationsverfahren zur Erzeugung der Ansteuersignale in Abhängigkeit eines unteren Schwellwerts für eine Motordrehzahl nₘᵢₙ zu verwenden.

Sofern die Motordrehzahl n geringer ist als der genannte Schwellwert der Motordrehzahl nₘᵢₙ, erfolgt das Erzeugen der Ansteuersignale durch Pulsweitenmodulation, so dass auch bei kleinen Motordrehzahlen n und kleinen Motordrehmomenten M erhöhte Drehmomentrippel vermieden werden können. Erst bei Motordrehzahlen, die größer oder gleich dem Schwellwert der Motordrehzahl nₘᵢₙ sind, werden die Ansteuersignale durch Phasenmodulation erzeugt.

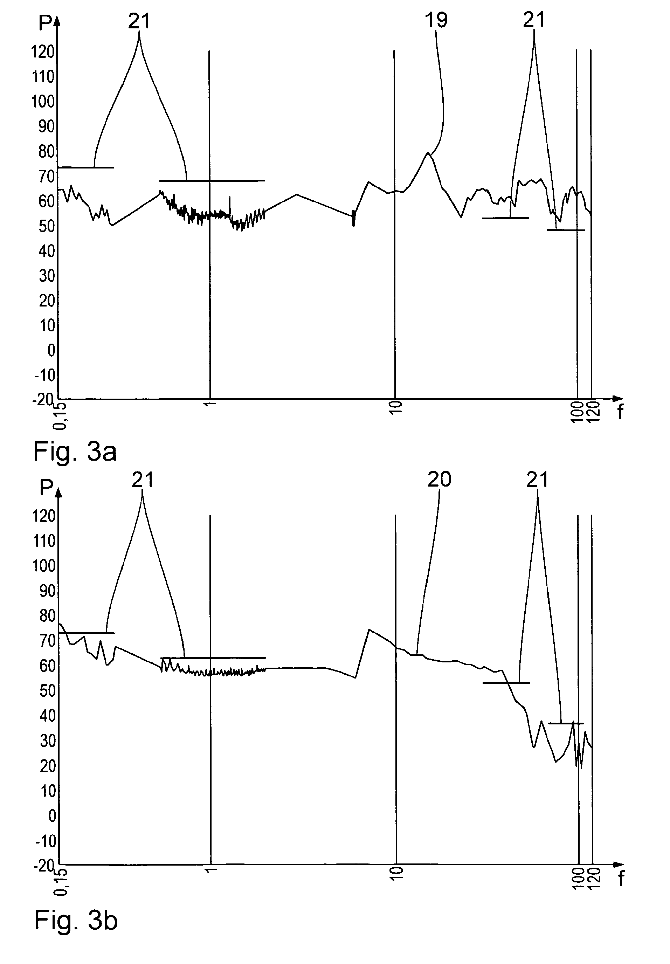

In Fig. 3 sind zwei identisch skalierte Diagramme der elektromagnetischen Verträglichkeit, d. h. der elektromagnetischen Abstrahlung des Gleichstrommotors 4 mit der Halbleiterschaltung 1 dargestellt für eine konventionelle Signalmodulation mittels Pulsweitenmodulation 19 und gemäß dem erfindungsgemäßen Verfahren 20. Die miteinander verglichenen Messprotokolle wurden mit einem Messgerät zur Erfassung der elektromagnetischen Verträglichkeit ermittelt. Aufgetragen auf der Hochachse ist ein Pegel P der elektromagnetischen Abstrahlung in dBµV. Das bedeutet, dass die elektromagnetische Verträglichkeit umso besser ist, je geringer der Pegel P ist. Entlang der Längsachse ist eine Schalt-Frequenz f in MHz logarithmisch aufgetragen. In den Diagrammen gemäß Fig. 3 sind gesetzlich festgelegte, zulässige Höchstwerte der elektromagnetischen Verträglichkeit eingezeichnet, die in Abhängigkeit der Schalt-Frequenz f verschiedene Pegel P annehmen. Grundsätzlich gilt, dass, je höher die Schalt-Frequenz f ist, desto niedriger ist der maximal zulässige Höchstpegel 21. Die in den Diagrammen dargestellten Kennlinien 19, 20 repräsentieren eine Häufigkeit maximaler Ausschläge einer aus den gemessenen Strömen I berechneten elektromagnetischen Abstrahlung. Ein Vergleich der beiden Kurven 19, 20 zeigt, dass bei der Anwendung des erfindungsgemäßen Verfahrens, insbesondere in einem UKW-Bereich von etwa 80 bis 120 MHz, der Pegel P der elektromagnetischen Abstrahlung gegenüber einem konventionellen Verfahren basierend auf der Pulsweitenmodulation signifikant reduziert ist. Insbesondere wird der in dem genannten Schalt-Frequenzbereich maximal zulässige Höchstpegel 21 eingehalten.

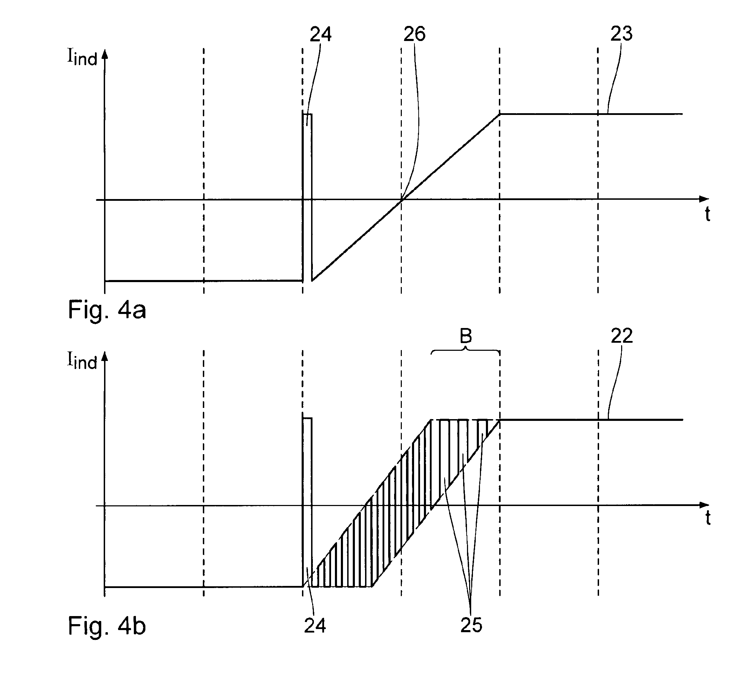

Im Folgenden wird anhand der Fig. 4 die Bestimmung der Rotationsposition des Rotors 7 bezüglich der Rotationsachse 8 gemäß einem Gleichstrommotor nach einem zweiten Ausführungsbeispiel näher beschrieben. Der Gleichstrommotor gemäß dem zweiten Ausführungsbeispiel weist eine sensorlose Kommutierung auf, d. h. die Rotationsposition des Rotors 7 wird nicht mittels mehrerer Hallsensoren, sondern durch Auswerten einer gegenelektromotorischen Kraft ermittelt. Die Auswertung der gegenelektromotorischen Kraft erfolgt dadurch, dass in einer stromlosen Statorspule 6 ein dort induzierter Strom I_{ind} erfasst wird.

Derartige Stromverläufe in Abhängigkeit von der Zeit sind für die Pulsweitenmodulation gemäß einem konventionellen Verfahren 22 und für das erfindungsgemäße Verfahren 23 in Fig. 4 gegenübergestellt. Beiden Signalverläufen gemeinsam ist ein so genannter Fly-Back-Impuls 24, der zu Beginn des Anstiegs des induzierten Stroms I_{ind} auftritt. Bei der Kommutierung, d.h. bei einem Umschalten eines Halbleiterschalters 13, 14 auf einen nächsten, wird der Strom in der abgeschalteten Statorspule 6 nicht sofort abgebaut. In Abhängigkeit der Induktivität der Statorspule 6 bedarf es dazu eines bestimmten Zeitintervalls, der sogenannten Entmagnetisierungsdauer. Während der Entmagnetisierung fließt der Strom gleichgerichtet, also in dieselbe Richtung wie bei der Kommutierung. Der gleichgerichtete Strom fließt durch eine Freilauf-Diode, sodass die Halbleiterschalter 13, 14 vor einer Spannungsüberhöhung, dem sogenannten Fly-Back-Impuls 24, geschützt sind.

Um die exakte Rotationsposition des Rotors 7 bestimmen und eine Kommutierung, d. h. ein Ansteuern der ausgewählten Statorspule 6 veranlassen zu können, ist ein Nulldurchgang des induzierten Stroms I_{ind} zu ermitteln. Das bedeutet, dass eine Nullstelle der Kennlinien 22, 23 bestimmt werden muss.

Aufgrund der Pulsweitenmodulation weist die Kennlinie 22 in dem Bereich des ansteigenden Stromsignals I_{ind} eine Bandbreite B auf, innerhalb derer mehrere Strompulse 25 nebeneinander angeordnet sind. Aufgrund der Bandbreite B einerseits und der Tatsache, dass innerhalb der Bandbreite B ein diskontinuierliches Stromsignal infolge der Pulse 25 vorliegt, andererseits, kann eine Nullstelle des induzierten Stromsignals I_{ind} nicht eindeutig ermittelt werden. Insofern ist das mittels Pulsweitenmodulation modulierte Stromsignal nicht geeignet, um eine exakte Nulldurchgangsbestimmung des induzierten Stroms I_{ind} in der stromlosen Statorspule 6 zu ermitteln.

Dagegen zeigt die Kennlinie 23 in dem genannten Bereich einen linearen Verlauf. Ein Nulldurchgang 26 ist somit unmittelbar und eindeutig als Schnittpunkt der Kennlinie 23 mit der Längs-(Zeit-)Achse bestimmbar. Das erfindungsgemäße Verfahren ermöglicht somit auch bei einem bürstenlosen Gleichstrommotor mit sensorloser Kommutierung eine exakte Ansteuerung der Statorspulen 6 und somit eine Verbesserung des Laufverhaltens des Motors insgesamt.

## Patentansprüche

1. Kommutierungsverfahren für einen bürstenlosen Gleichstrommotor umfassend die Verfahrensschritte
a. Bereitstellen eines bürstenlosen Gleichstrommotors (4) mit
i. einem um eine Rotationsachse (8) drehbaren Rotor (7) und
ii. mehreren mittels einer Schaltung (3) ansteuerbaren Statorspulen (6A, 6B, 6C),
b. Bestimmen der Rotationsposition des Rotors (7) bezüglich der Rotationsachse (8),
c. Auswählen einer anzusteuernden Statorspule (6A; 6B; 6C) in Abhängigkeit der bestimmten Rotationsposition des Rotors (7) mit einer Steuerungseinheit (11),
d. Erzeugen eines Ansteuersignals für einen Schaltvorgang mittels der Schaltung (3),
e. Ansteuern der ausgewählten Statorspule (6A; 6B; 6C) mittels der Steuerungseinheit (11) durch Übertragen des von der Schaltung (3) erzeugten Ansteuersignals,
f. wobei genau ein Schaltvorgang innerhalb einer für die ausgewählte Statorspule (6A; 6B; 6C) relevanten Schaltperiode erfolgt.

2. Verfahren nach Anspruch 1, **gekennzeichnet durch** ein Beaufschlagen der ausgewählten Statorspule (6A; 6B; 6C) mit elektrischem Strom mittels eines ersten Ansteuersignals innerhalb einer ersten Schaltperiode und ein Beenden der Strombeaufschlagung der ausgewählten Statorspule (6A; 6B; 6C) mittels eines zweiten Ansteuersignals innerhalb einer zweiten Schaltperiode, die insbesondere der ersten Schaltperiode direkt nachfolgt.

3. Verfahren nach Anspruch 2, **dadurch gekennzeichnet, dass** das erste Ansteuersignal einen Beginn eines Ansteuerpulses (18) und das zweite Ansteuersignal ein Ende des Ansteuerpulses (18) definiert.

4. Verfahren nach Anspruch 3, **dadurch gekennzeichnet, dass** der Ansteuerpuls (18) bezüglich einer Grenze (17) zwischen der ersten und der zweiten Schaltperiode zentriert angeordnet ist.

5. Verfahren nach einem der vorstehenden Ansprüche, **dadurch gekennzeichnet, dass** ein Zeitpunkt des Ansteuerns der ausgewählten Statorspule (6A; 6B; 6C) innerhalb der relevanten Schaltperiode veränderlich ist.

6. Verfahren nach einem der vorstehenden Ansprüche, **dadurch gekennzeichnet, dass** das Erzeugen des Ansteuersignals durch Phasenmodulation erfolgt.

7. Verfahren nach Anspruch 6, **dadurch gekennzeichnet, dass** das Ansteuersignal durch binäre Phasenmodulation, insbesondere durch ein Umschalten zwischen zwei Phasenlagen, insbesondere durch ein Umschalten zwischen einer 0°-Phasenlage und einer 180°-Phasenlage, erfolgt.

8. Verfahren nach Anspruch 6 oder 7, **gekennzeichnet durch** ein Aktivieren der Phasenmodulation ab einem unteren Schwellwert einer Motordrehzahl (nₘᵢₙ).

9. Verfahren nach einem der vorstehenden Ansprüche, **dadurch gekennzeichnet, dass** das Bestimmen der Rotationsposition des Rotors (7) bezüglich einer ausgewählten Statorspule (6A; 6B; 6C) mit jeweils einem dieser Statorspule (6A; 6B; 6C) zugeordneten Lagesensor (9A; 9B; 9C), insbesondere einem Hallsensor, erfolgt.

10. Verfahren nach Anspruch 9, **dadurch gekennzeichnet, dass** das Bestimmen der Rotationsposition des Rotors (7) bezüglich der Rotationsachse (8) durch Verarbeiten von Lagesignalen der Lagesensoren (9A; 9B; 9C) mit einer Berechnungseinheit (10) erfolgt, die insbesondere in die Steuerungseinheit (11) integriert ist.

11. Verfahren nach einem der Ansprüche 1 bis 8, **dadurch gekennzeichnet, dass** das Bestimmen der Rotationsposition des Rotors (7) bezüglich der Rotationsachse (8) durch Auswerten einer gegen-elektromotorischen Kraft erfolgt.

12. Verfahren nach Anspruch 11, **gekennzeichnet durch** ein Ermitteln eines Nulldurchgangs eines in einer stromlosen Statorspule (6A; 6B; 6C) gemessenen Verlauf eines induzierten Stroms.
